# EUROPEAN PATENT SPECIFICATION

(11) **EP 2 211 081 B1**
(45) Date of publication and mention of the grant of the patent: **21.09.2011**
(21) Application number: 09178554.3
(22) Date of filing: 09.12.2009
(51) Int. Cl.: F16M 11/12, B60R 11/02

(54) **Mounting assembly for mounting a display panel**
Befestigungsbaugruppe zur Montage einer Anzeigetafel
Ensemble d'assemblage pour le montage d'un panneau d'affichage

(30) Priority: 21.01.2009 US 357019
(43) Date of publication of application: 28.07.2010
(73) Proprietor: DEERE & COMPANY, Moline, Illinois 61265-8098 (US)
(72) Inventor: Steege, Scott Charles, Ankeny, IA 50021 (US); Bartz, Shawn M, Waterloo, IA 52702 (US)
(74) Representative: Dehnhardt, Florian Christopher

(56) References cited:
- US-A1- 2004 011 015
- US-A1- 2005 218 273
- US-A1- 2006 289 715

## Description

The present invention relates to a mounting assembly for mounting a display panel.

Document US 2006/0289715 A shows a mounting assembly which is suitable for mounting a display panel and discloses the features of the preamble of claim 1.

Certain vehicles, such as tractors, are provided with armrest control modules. Display panels are mounted on arms which are attached to and project out from the armrest control module. Such display panels must be adjustable in order to accommodate different operators. In a current production design, the display panel is adjustable, but is only pivotable about a single axis. It is desired to have a mounting assembly for mounting a display panel which can be adjusted more than being pivotal about a single axis.

Accordingly, an object of this invention is to provide a mounting assembly for mounting a display panel which can be adjusted more than being pivotal about a single axis.

This and other objects are achieved by the present invention, wherein a mounting assembly is provided for mounting a display panel on a support. The mounting assembly comprises a dome-shaped lower bearing on the support, an upper bearing, and a carrier attached to the display panel and held between the upper and lower bearings. The lower bearing has a pair of tabs projecting therefrom. The carrier has an opening which receives the tabs. A stop post projects from the support adjacent the lower bearing. An stop aperture which receives the stop post is formed in the carrier spaced apart from the opening. The opening and the tabs cooperating to control pivoting of the carrier with respect to the support in one degree of freedom. The aperture and the stop post cooperate to control pivoting of the carrier in a second degree of freedom. A bolt extends through the lower bearing, the upper bearing, and the carrier. A locknut is screwed onto an end of the bolt and engages a bottom side of the lower bearing.

Conventional mounting assemblies often include at least one thumb knob for each direction of movement. However, this mounting assembly permits a significant amount of movement without any hardware to loosen. The operator can simply grab the display panel and reposition it to a desired position. The amount of adjustment in two directions is significant compared to other mounting assemblies. The harness is concealed behind a cover to keep a clean, slim looking design. The mounting assembly can accommodate multiple displays panels.

For a complete understanding of the objects, techniques, and structure of the invention reference should be made to the following detailed description and accompanying drawings, wherein similar components are designated by identical reference numerals:
- Fig. 1: is an upper perspective view of a mounting assembly for mounting a display panel embodying the invention,
- Fig. 2: is a lower front perspective view of the mounting assembly according to Fig. 1,
- Fig. 3: is an exploded perspective view of the mounting assembly according to Fig. 2,
- Fig. 4: is another exploded perspective view of the mounting assembly according to Fig. 2,
- Fig. 5: is a perspective view of the mounting assembly according to Fig. 2, with parts removed for clarity, and
- Fig. 6: is a perspective view of an upper bearing shown in Fig. 3.
- Fig. 7: is another perspective view of the upper bearing shown in Fig. 3.

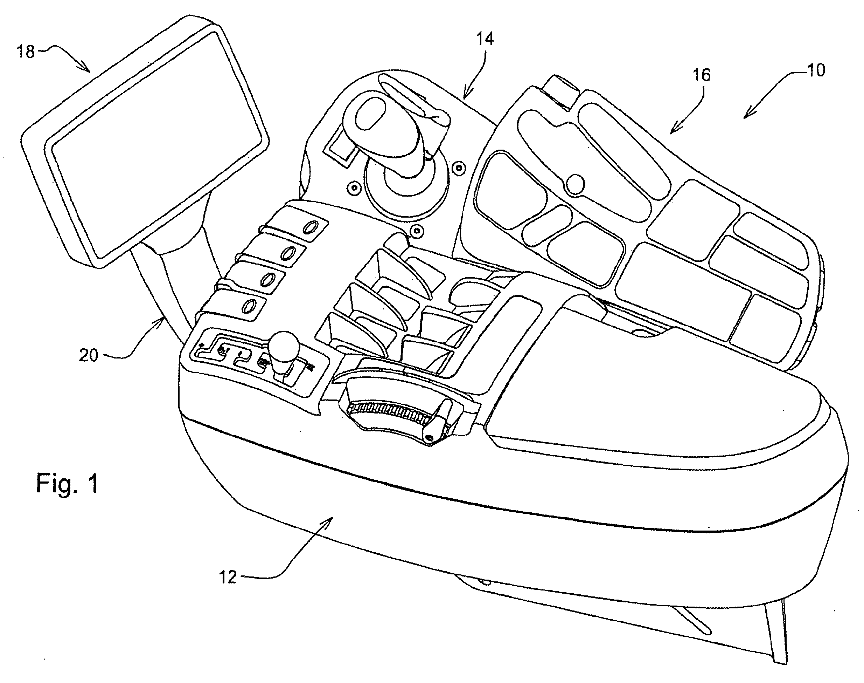

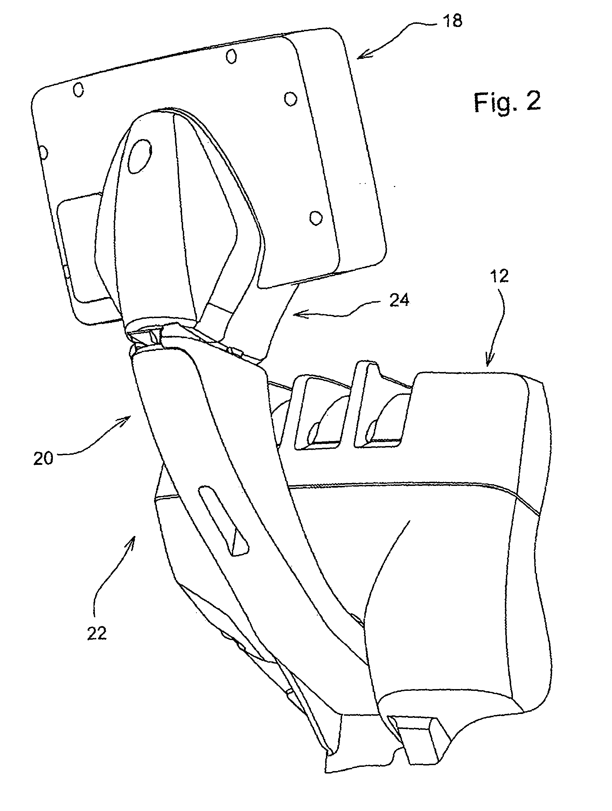

Referring to Fig. 1, an armrest assembly 10 includes a tub or armrest base unit 12, a joystick module 14, a control module 16 and a display panel 18 mounted on a support 20. Support 20 is preferably an arm. As best seen in Fig. 2, a mounting assembly 22 for mounting the display panel 18 includes a carrier 24 which is mounted to one end on support 20. The other end of support 20 is attached to the underside of armrest base unit 12. The support 20 is preferably an aluminum die cast component. The carrier 24 is preferably made of nylon 6/6 with 33 % glass. A wire harness (not shown) is concealed within the support 20 and the carrier 24.

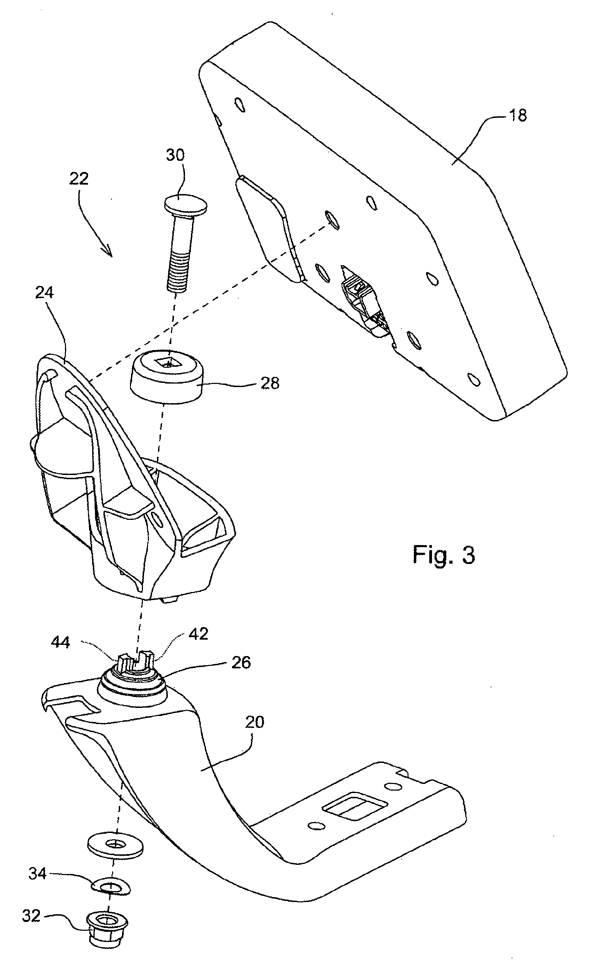

Referring now to Fig. 3, the mounting assembly 22 includes carrier 24 which is attached to the display panel 18, a spherical or dome-shaped lower bearing 26 on an upper end of support 20, a dome-shaped upper bearing 28, a coupling member formed by a bolt 30, a lock nut 32 and a bevel washer 34. The upper bearing 28 is preferably made of nylon. Bolt 30 is preferably a carriage bolt. The lock nut 32 is screwed onto an end of the bolt 30 and engages a bottom side of the lower bearing 26.

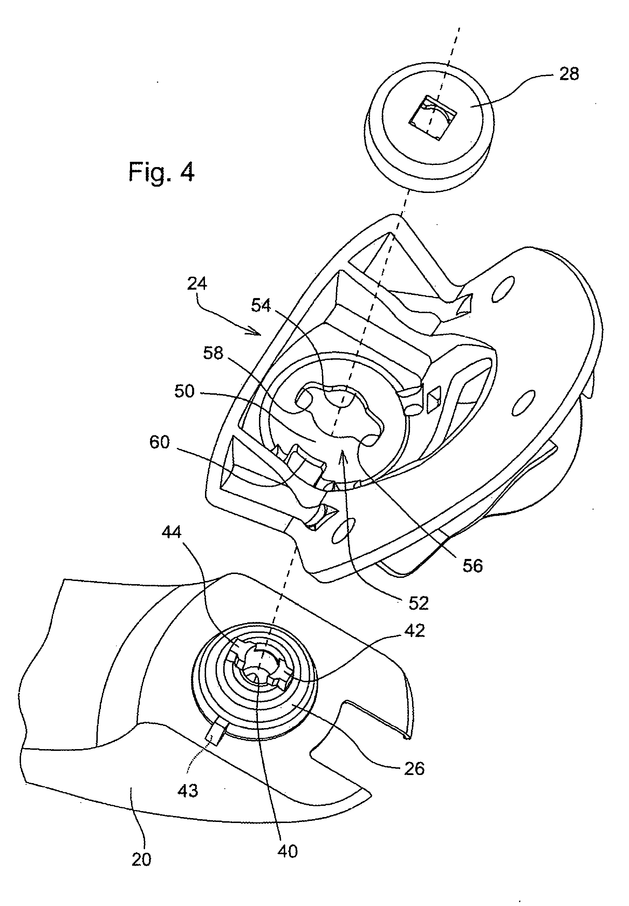

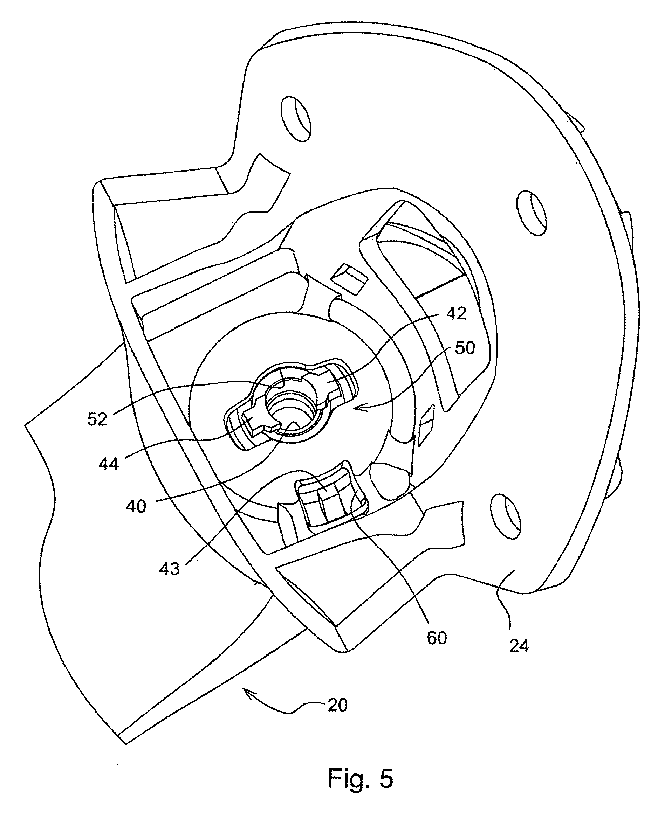

Referring now to Figs. 4 and 5, the lower bearing 26 has a central bore 40 and a pair of upwardly projecting stops or tabs 42 and 44 on opposite sides of the bore 40. A stop post 43 projects from the support 20 adjacent to one side of the lower bearing 26. The lower end of carrier 24 forms a dome-shaped partially spherical bearing surface 50 in which is formed an opening 52. Opening 52 has circular central portion 54 and a pair of rectangular slots 56 and 58 extending in opposite directions from each other. Bearing surface 50 receives and mates with lower bearing 26, and the opening 52 receives the tabs 42 and 44. The lower end of carrier 24 also forms a stop aperture 60 which receives the stop post 43. Aperture 60 is preferably rectangular or square, and the sides of aperture 60 are engagable with stop post 43 to limit pivoting of the carrier 24 with respect to the support 20.

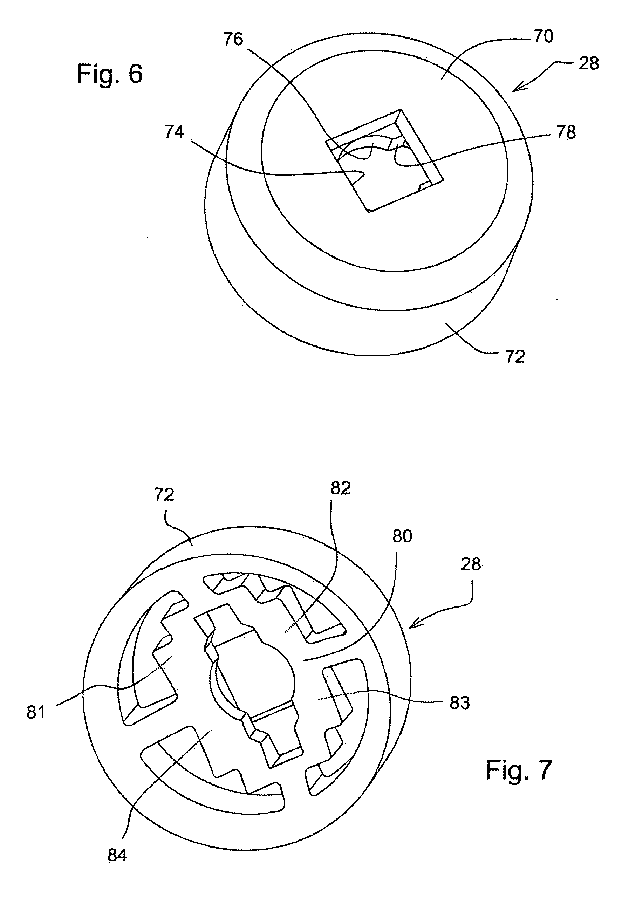

As best seen in figs. 6 and 7, the upper bearing 28 has a flat circular top 70 surrounded by a cylindrical skirt 72. A square recess 74 is formed in the center of the top 70. Recess 74 receives a head portion of the bolt 30 which thereby prevents rotation of the upper bearing 28. A circular opening 76 extends through the recess 74 and a slot 78 projects from one side of the opening 76. A series of ridges 81, 82, 83 and 84 is formed on an underside 80 of the top 70. The ridges 81, 82, 83, 84 are engagable with an outer surface of the bearing surface.

When assembled as shown in Figs. 1 and 2, the bearing surface 50 is frictionally held between the upper bearing 28 and the lower bearing 26. As best seen in Fig. 5, the carrier 24 can pivot or swivel around the axis of bore 40, because the dimensions of the slots 56 and 58 are larger than the corresponding dimensions of the tabs 42 and 44. The pivoting of carrier 24 about the axis of bore 40 is limited by the engagement of stop post 43 with one pair of sides of aperture 60. In addition to being pivotal about the axis of bore 40, the carrier 24 is also pivotal in directions parallel to the long dimension of opening 52, or about a axis which is perpendicular to the axis of bore 40. Pivoting in these directions is limited by the engagement of stop post 43 with another pair of sides of aperture 60. As a result, the carrier 24 and the display panel 18 can pivot with two degrees of freedom with respect to the support 20.

The carrier 24 is allowed to pivot and swivel on the spherical surface of lower bearing 26 between the support 20 and the upper bearing 28. There is 16 degrees of movement allowed in a horizontal swivel plane and 7 degrees of movement in a vertical plane around the lower bearing 26 without any hardware adjustments. The bevel washer 34 provides enough spring load in the joint to maintain position after adjustment. The operator can simply grab the display panel 18 and rotate and/or pivot it to a desired position. The components are designed to conceal the wiring harness needed for the display panel 18. The mounting assembly 22 could support multiple display panels. The force required to move the carrier 24 can be changed by applying more torque to the lock nut 34 on the bolt 30. This would be advantageous for larger, heavier display panels mounted on the same support or arm.

## Claims

1. A mounting assembly for mounting a display panel on a support, comprising a dome-shaped lower bearing (26) on the support (20), the lower bearing (26) having a pair of tabs (42, 44) projecting therefrom; an upper bearing (28); and a carrier (24) attached to the display panel (18) and held between the upper and lower bearings (28, 26), the carrier (24) having an opening (52) which receives the tabs (42, 44), the opening (52) and the tabs (42, 44) cooperating to permit the carrier (24) to pivot with respect to the support (20) with at least two degrees of freedom, **characterized in that** a stop post (43) projects from the support (20) adjacent the lower bearing (26), and a stop aperture (60) is formed in the carrier (24) spaced apart from the opening (52), the post (43) being engagable with sides of the aperture (60) to limit pivoting of the carrier (24) with respect to the support (20).

2. The mounting assembly according to claim 1, **characterized in that** the aperture (60) has a rectangular shape.

3. The mounting assembly according to claim 1 or 2, **characterized in that** the opening (52) has a circular central portion (54) and a pair of rectangular slots (56, 58) extending in opposite directions from each other.

4. The mounting assembly according to one of claims 1 to 3, **characterized by** a bolt (30) which extends through the lower bearing (26), the upper bearing (28), and the carrier (24).

5. The mounting assembly according to claim 4, **characterized by** a lock nut (32) which is screwed onto an end of the bolt (30), and the lock nut (32) engages a bottom side of the lower bearing (26).

6. The mounting assembly according to one of claims 1 to 5, **characterized in that** the lower bearing (26) has a central bore (40) extending therethrough, and a coupling member which extends through the central bore (40) and couples the upper bearing (28) and the carrier (24) to the lower bearing (26).

7. The mounting assembly according to claim 6, **characterized in that** the tabs (42, 44) project from opposite sides of the central bore (40).

## Patentansprüche

1. Befestigungsbaugruppe zur Montage einer Anzeigetafel an einer Stütze mit einem kuppelförmigen unteren Lager (26) an der Stütze (20), wobei das untere Lager (26) ein Paar Laschen (42, 44) hat, die davon vorragen, einem oberen Lager (28) und einem Träger (24), der an der Anzeigetafel (18) angebracht und zwischen dem oberen und dem unteren Lager (28, 26) gehalten ist, wobei der Träger (24) eine Öffnung (52) hat, die die Laschen (42, 44) aufnimmt, wobei die Öffnung (52) und die Laschen (42, 44) zusammenwirken, damit der Träger (24) bezüglich der Stütze (20) mit mindestens zwei Freiheitsgraden schwenken kann, **dadurch gekennzeichnet, dass** ein Anschlagpfosten (43) von der Stütze (20) angrenzend an das untere Lager (26) vorragt und eine Anschlagöffnung (60) von der Öffnung (52) beabstandet im Träger (24) gebildet ist, wobei der Pfosten (43) mit Seiten der Öffnung (60) in Eingriff gebracht werden kann, um das Schwenken des Trägers (24) bezüglich der Stütze (20) zu begrenzen.

2. Befestigungsbaugruppe nach Anspruch 1, **dadurch gekennzeichnet, dass** die Öffnung (60) eine rechteckige Form hat.

3. Befestigungsbaugruppe nach Anspruch 1 oder 2, **dadurch gekennzeichnet, dass** die Öffnung (52) einen kreisförmigen mittleren Abschnitt (54) und ein Paar rechteckiger Schlitze (56, 58) hat, die sich in entgegengesetzten Richtungen voneinander erstrecken.

4. Befestigungsbaugruppe nach einem der Ansprüche 1 bis 3, **gekennzeichnet durch** einen Bolzen (30), der sich **durch** das untere Lager (26), das obere Lager (28) und den Träger (24) erstreckt.

5. Befestigungsbaugruppe nach Anspruch 4, **gekennzeichnet durch** eine Sicherungsmutter (32), die auf ein Ende des Bolzens (30) geschraubt ist, wobei die Sicherungsmutter (32) eine untere Seite des unteren Lagers (26) in Eingriff nimmt.

6. Befestigungsbaugruppe nach einem der Ansprüche 1 bis 5, **dadurch gekennzeichnet, dass** das untere Lager (26) eine sich durch es hindurch erstreckende mittlere Bohrung (40) und ein Koppelglied hat, das sich durch die mittlere Bohrung (40) erstreckt und das obere Lager (28) und den Träger (24) an das untere Lager (26) koppelt.

7. Befestigungsbaugruppe nach Anspruch 6, **dadurch gekennzeichnet, dass** die Laschen (42, 44) von gegenüberliegenden Seiten der mittleren Bohrung (40) vorragen.

## Revendications

1. Ensemble d'assemblage pour le montage d'un panneau d'affichage sur un support, comprenant un appui inférieur (26) en forme de dôme prévu sur le support (20), l'appui inférieur (26) étant doté d'une paire de languettes (42, 44) en ressortant ; un appui supérieur (28) ; et un plateau porteur (24) fixé au panneau d'affichage (18) et maintenu entre les appuis inférieur et supérieur (28, 26), le plateau porteur (24) ayant une ouverture (52) qui reçoit les languettes (42, 44), l'ouverture (52) et les languettes (42, 44) coopérant pour permettre au plateau porteur (24) de pivoter par rapport au support (20) avec au moins deux degrés de liberté, **caractérisé en ce qu'**un poteau d'arrêt (43) ressort du support (20) à côté de l'appui inférieur (26) et qu'une ouverture d'arrêt (60) est formée dans le plateau porteur (24) séparé de l'ouverture (52), le poteau (43) pouvant entrer en prise avec les côtés de l'ouverture (60) pour limiter le pivotement du plateau porteur (24) par rapport au support (20).

2. Ensemble d'assemblage selon la revendication 1, **caractérisé en ce que** l'ouverture (60) prend une forme rectangulaire.

3. Ensemble d'assemblage selon la revendication 1 ou 2, **caractérisé en ce que** l'ouverture (52) a une partie centrale circulaire (54) et une paire de fentes rectangulaires (56, 58) s'étendant dans des directions opposées l'une par rapport à l'autre.

4. Ensemble d'assemblage selon l'une quelconque des revendications 1 à 3, **caractérisé par** un écrou (30) s'étendant à travers l'appui inférieur (26), l'appui supérieur (28) et le plateau porteur (24).

5. Ensemble d'assemblage selon la revendication 4, **caractérisé par** un contre-écrou (32) qui est vissé sur une extrémité de l'écrou (30), et le contre-écrou (32) engrenant un côté de l'appui inférieur (26).

6. Ensemble d'assemblage selon l'une quelconque des revendications 1 à 5, **caractérisé en ce que** l'appui inférieur (26) est doté d'un alésage central (40) s'étendant à travers lui et d'un élément de couplage s'étendant à travers l'alésage central (40) et couplant l'appui supérieur (28) et le plateau porteur (24) à l'appui inférieur (26).

7. Ensemble d'assemblage selon la revendication 6, **caractérisé en ce que** les languettes (42, 44) ressortent des côtés opposés de l'alésage central (40).
